# DEMANDE DE BREVET EUROPEEN

(11) **EP 0 561 425 A1**
(43) Date de publication de la demande: **22.09.1993**
(21) Numéro de dépôt: 93107154.2
(22) Date de dépôt: 02.10.1989
(51) Int. Cl.: H02P 7/00, H02P 1/46

(54) **Moteur synchrone dont le sens de rotation peut être choisi**

(30) Priorité: 04.10.1988 FR 8812946
(62) Demande divisionnaire de: 89402704.4
(71) Demandeur: CROUZET Electroménager, F-26000 Valence (FR)
(72) Inventeur: Girardin, Denis, F-26300 Bourg-de-Peage (FR); Purson, Hervé, F-26300 Bourg-de-Peage (FR)
(74) Mandataire: Bloch, Gérard

(57) **Abrégé**

Moteur synchrone comprenant un rotor (14) à aimant permanent (141) et un stator (11-13) à champ homopolaire pourvu d'un enroulement (13) relié à une source (2) de tension alternative (V), caractérisé par le fait qu'il est pourvu d'un interrupteur (3) commandable, disposé entre ladite source (2) et ledit enroulement (13), et d'un circuit (4') de commande dudit interrupteur, agencé pour imposer audit rotor un sens de démarrage, et pour appliquer audit enroulement (13), une tension continue (VC) de valeur comparable à la valeur efficace de ladite tension alternative (V), pendant une durée comparable à la période de ladite tension alternative (V) pour prépositionner ledit rotor (14) dans une première position de repos.

## Description

La présente invention a pour objet un moteur synchrone comprenant un rotor à aimant permanent et un stator à champ homopolaire pourvu d'un enroulement relié à une source de tension alternative.

Un tel moteur est un moteur de petite puissance, et d'un prix de revient modique, utilisé notamment dans le domaine de l'électroménager.

Un tel moteur présente l'inconvénient de n'avoir pas de sens de rotation privilégié, et de partir soit dans un sens, soit dans l'autre, et de façon aléatoire, si on ne prend pas de mesures particulières.

Pour la majorité des applications de ces moteurs, une telle incertitude sur le sens de rotation n'est pas tolérable, et il est connu de prévoir, sur un tel moteur, un dispositif mécanique, par exemple un cliquet, pour imposer au rotor un sens de rotation déterminé. On connaît aussi un moteur où le sens de démarrage est déterminé par construction (voir par exemple DE-A-1563156).

Toutefois cela limite l'emploi du moteur à des applications où, une fois installé, il ne doit tourner que dans un sens. Or, dans de nombreuses applications, il est commode de pouvoir entrainer, au choix, un organe soit dans un sens, soit dans l'autre, ce choix se faisant par l'intermédiaire d'un signal électrique de commande. Dans ces applications, le moteur synchrone connu, pourvu de son cliquet, n'est pas utilisable.

La présente invention vise à pallier cet inconvénient, en procurant un moteur du type défini ci-dessus, pour lequel on peut commander électriquement le sens de rotation.

A cet effet, elle a pour objet un moteur du type défini ci-dessus, caractérisé par le fait qu'il est pourvu d'un interrupteur commandable, disposé entre ladite source et ledit enroulement, et d'un circuit de commande dudit interrupteur, agencé pour :
- en réponse à une consigne d'arrêt de rotation dudit rotor et en réponse à ladite tension alternative, ouvrir ledit interrupteur à un instant où ladite tension alternative décroît en valeur absolue ou s'annule, et mémoriser le signe de la pente de ladite tension alternative audit instant d'ouverture, et,
- en réponse à une consigne de mise en rotation dudit rotor dans un sens identique, respectivement opposé, à celui avant ledit arrêt, et en réponse à ladite tension alternative, fermer ledit interrupteur à un instant où ladite tension alternative s'annule, ou croît en valeur absolue, avec une pente de signe identique, respectivement opposé, audit signe mémorisé.

Dans le moteur de l'invention, du fait que l'excitation cesse pendant une phase déterminée de la tension alternative qui la produit, et du fait qu'elle est rétablie pendant une autre phase déterminée de cette tension alternative, le sens de mise en rotation après arrêt n'est pas quelconque, relativement au sens de rotation avant arrêt. Et ce sens peut être choisi. Ainsi, avec un tel moteur, il suffit donc de déterminer une fois un sens de rotation du moteur, par exemple au moment de sa première mise en marche, pour pouvoir l'utiliser ensuite comme moteur à sens de rotation commandable. Ceci est un avantage important compte tenu de la simplicité et du bas pris de revient de ce type de moteur.

Avantageusement, ledit interrupteur commandable est un triac.

Pour un triac, il est connu que l'ouverture se produit obligatoirement au moment où le courant qui le traverse est sensiblement nul. Comme, pour le type de moteur dont il est question ici, la composante résistive de l'impédance de l'enroulement est relativement élevée, on peut considérer que le déphasage entre la tension alternative appliqué à l'enroulement et le courant qui le traverse est faible. Dans ce cas, l'instant d'annulation du courant est sensiblement le même que l'instant d'annulation de la tension. Les conditions d'ouverture sont bien respectées, sans qu'il soit nécessaire que le circuit commande effectivement l'instant d'ouverture du triac. Il suffit que, dès réception de la consigne d'arrêt, le circuit applique une tension nulle à l'électrode de commande du triac.

Avantageusement encore, ledit circuit de commande est agencé pour appliquer audit enroulement, et avant la première mise en rotation dudit rotor, une tension continue de valeur comparable à la valeur efficace de ladite tension alternative, pendant une durée comparable à la période de ladite tension alternative, pour placer à coup sûr ledit rotor dans une position déterminée, dans laquelle le signe de la pente de ladite tension alternative après fermeture dudit interrupteur impose le sens de rotation.

Dans ce cas, il n'est pas nécessaire de déterminer, même une seule fois, un sens de rotation du moteur, dans la mesure où l'impulsion de tension continue qui lui est appliquée vient positionner son rotor dans une position déterminée, dans laquelle on maîtrise le sens de mise en rotation par la pente de la tension au moment de la fermeture.

La présente invention sera mieux comprise à la lecture de la description de la forme de réalisation préférée du moteur de l'invention, et d'une variante, faite en se référant aux dessins annexés, sur lesquels :
- la figure 1 représente un schéma par blocs d'un montage incluant un moteur et les circuits électriques et électroniques nécessaires à son fonctionnement, conformes à l'invention,
- la figure 2 représente une vue éclatée, en coupe, du rotor, du stator et de l'enroulement du moteur de la figure 1,
- la figure 3 représente l'agencement des pôles du stator du moteur de la figure 2,
- la figure 4 représente une vue de dessus, partielle, du rotor et du stator du moteur de la figure 2, dans une première position de repos,
- la figure 5 représente une vue de dessus partielle, du rotor et du stator du moteur de la figure 2, dans une deuxième position de repos,
- la figure 6 représente un diagramme temporel des signaux du montage de la figure 1, et,
- la figure 7 représente une variante du montage de la figure 1.

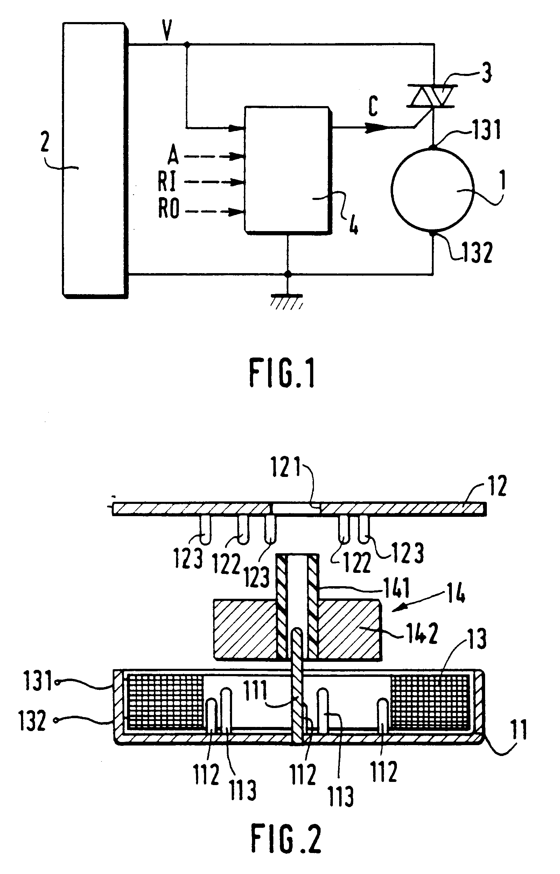

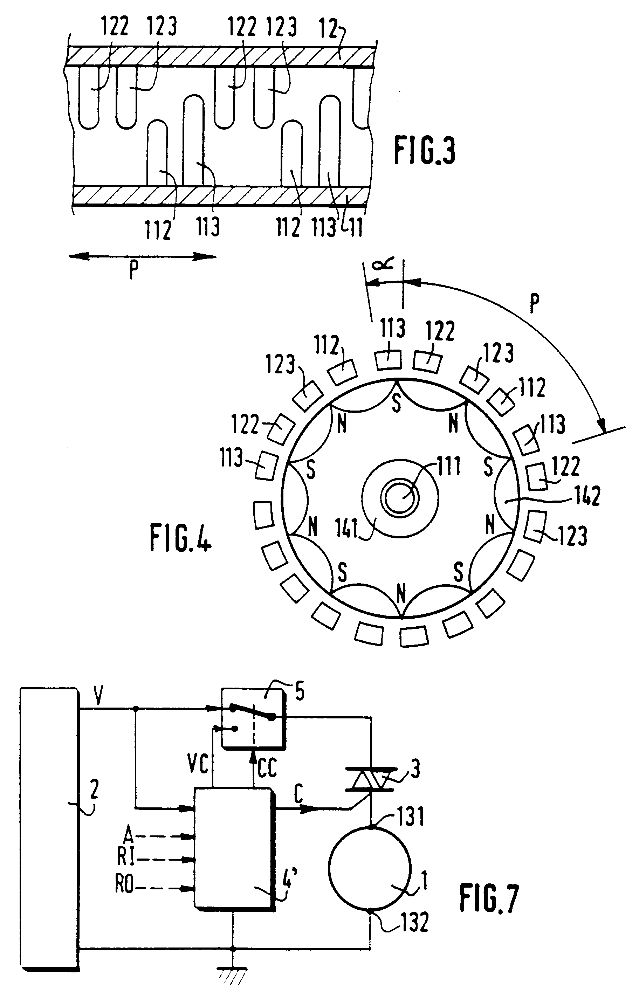

En se référant à la figure 1, un moteur synchrone 1 est relié à une source 2 d'une tension alternative V par l'intermédiaire d'un interrupteur commandable, en l'occurrence un triac 3.

La source 2 est ici une source de tension alternative de 220 Veff à 50 H_{Z}. Une de ces bornes est reliée à une masse électrique, ainsi qu'à une des bornes du moteur 1.

Un circuit électronique 4 est pourvu d'une borne reliée à la masse, de quatre bornes d'entrée recevant respectivement la tension alternative V, un signal A, un signal RI et un signal RO, et d'une sortie délivrant un signal C appliqué à l'électrode de commande du triac 3.

Le signal A est un signal binaire de commande d'arrêt de la rotation du moteur 1, et les signaux RI et RO des signaux binaires de commande de mise en rotation du moteur 1.

En effet, et comme cela sera mieux compris dans la suite, le circuit 4 est agencé pour, lorsque le moteur 1 tourne, et en réponse à une consigne d'arrêt, arrêter ce moteur 1, et pour, une fois le moteur 1 arrêté, et en réponse à une consigne de mise en rotation, le faire repartir soit dans un sens identique à celui dans lequel il tournait avant l'arrêt, soit dans un sens opposé, et cela au choix de l'utilisateur.

La consigne d'arrêt du moteur est représentée, par exemple, par une impulsion au niveau haut du signal A, normalement au niveau bas, cette impulsion devant être suivie de l'arrêt du moteur. De même, la consigne de mise en rotation dans un sens identique à celui avant l'arrêt est représentée par une impulsion au niveau haut du signal RI normalement au niveau bas, tandis que la consigne de mise en rotation dans un sens opposé à celui avant l'arrêt est représentée par une impulsion similaire du signal RO normalement au niveau bas.

Les signaux A, RI et RO sont élaborés dans un circuit de type connu et non représenté dans un souci de simplicité, en réponse aux instructions de l'utilisateur du moteur, ou à celles en provenance d'un microprocesseur lorsque, comme cela peut être le cas, le moteur 1 est utilisé dans un système automatisé.

Le moteur 1 est représenté en coupe, et de façon éclatée, sur la figure 2. Un boitier métallique comprenant un fond 11 et un couvercle 12 renferme un enroulement statorique 13 et un rotor 14 à aimant permanent.

La fond 11 est en forme de cylindre circulaire de hauteur faible par rapport à son diamètre, et il supporte une tige 111 cylindrique circulaire qui s'étend le long de son axe.

Le rotor 14 comporte un manchon 141, ici en matière plastique, qui pivote autour de la tige 111. Une couronne 142 en aimant permanent est solidaire du manchon 141. Elle comprend dix pôles régulièrement répartis sur sa périphérie, alternativement Nord et Sud.

Le fond 11 supporte cinq paires de pôles 112 et 113, régulièrement disposées autour de la couronne 142. Les pôles 112 et 113 sont des tiges s'étendant parallèlement à la tige 111. Les pôles 112 ont une longueur sensiblement égale à la moitié de la hauteur du fond 11, et les pôles 113 sont plus longs.

L'espace compris entre les paires de pôles 112 et 113 et la paroi cylindrique du fond est rempli par l'enroulement 13, de même axe que le fond 11, dont les deux bornes 131 et 132 constituent les bornes du moteur 1.

Le couvercle 12 supporte cinq paires de pôles 122 et 123, régulièrement disposées pour venir autour de la couronne 142, dans les intervalles laissés libres entre les paires de pôles 112 et 113 du fond 11, lorsque le couvercle 12 ferme le fond 11.

Les pôles 122 et 123 sont des tiges s'étendant parallèlement à la tige 111. Les pôles 122 et 123 sont tous de la même longueur, égale à celle des pôles 112.

Le couvercle 12 est percé d'un trou 121 pour laisser passer une partie du manchon 141 qui constitue ainsi l'arbre de sortie du moteur 1.

La figure 3 montre la position relative des pôles 112, 113, 122 et 123, qui se succèdent dans cet ordre, et ainsi de suite, lorsque le couvercle 12 ferme le fond 11. La couronne 142 se trouve donc entourée ici de 20 pôles que l'on peut grouper en cinq paquets de 4 pôles, de pas polaire P égal à 72°.

Le stator du moteur 1 comprend ainsi l'enroulement 13 et les cinq groupes de quatre pôles 112, 113, 122 et 123 supportés par le fond 11 et par le couvercle 12, respectivement.

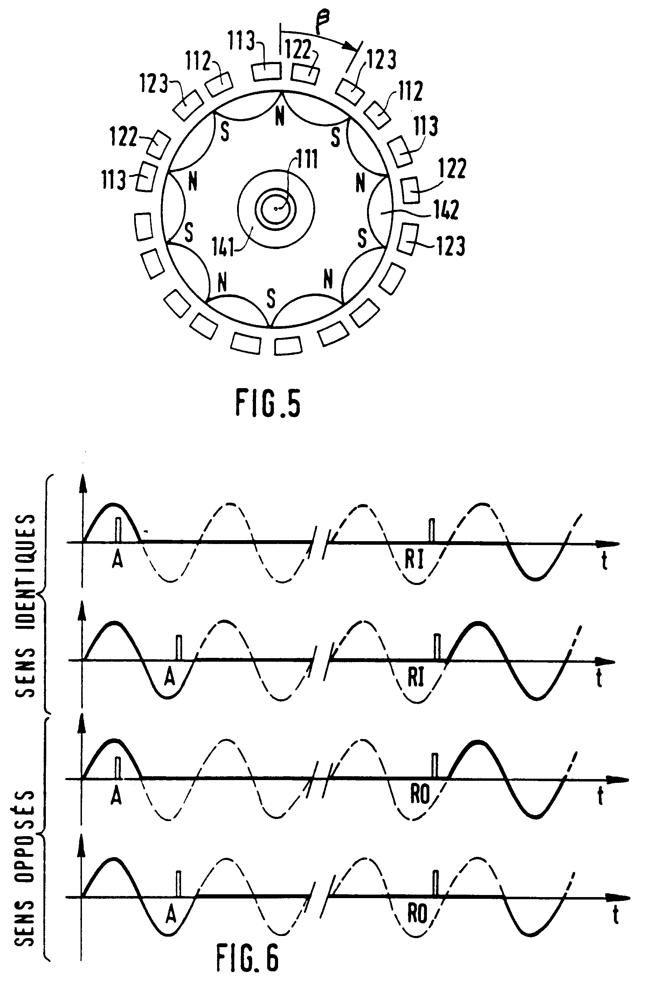

Les figures 4 et 5 montrent chacune, à une échelle agrandie, une vue de dessus de la couronne 142 du rotor 14, et des pôles 112, 113, 122 et 123.

La figure 4 représente le rotor 14 dans une première position de repos possible relativement au stator, lorsque l'enroulement 13 n'est pas excité. Dans cette position, un pôle Sud de la couronne 142 est disposé pour faire face au bord du pôle 113 le plus proche du pôle 122 voisin.

La figure 5 représente le rotor 14 dans une deuxième position de repos possible relativement au stator, lorsque l'enroulement 13 n'est pas excité. Dans cette position, un pôle Nord de la couronne 142 est disposé pour faire face au bord du pôle 113 le plus proche du pôle 122 voisin.

Les première et deuxième positions de repos qui viennent d'être décrites sont les seules possibles pour le rotor 14 relativement au stator, lorsque l'enroulement 13 n'est pas excité.

Lorsque l'on excite l'enroulement 13 à l'aide de la tension alternative de fréquence 50 H_{Z}, chaque paire de pôles 112 et 113 devient alternativement Nord et Sud, tandis que chaque paire de pôles 122 et 123 devient alternativement Sud et Nord.

Du fait que les effets de la dissymétrie, introduite par le pôle 113, de longueur supérieure aux autres, sont plus importants lorsque l'enroulement 13 est excité que lorsqu'il ne l'est pas, la mise sous tension de l'enroulement 13 est nécessairement suivie d'un déplacement du rotor 14, même si, immédiatement après cette mise sous tension, le pôle 113 devient Nord alors que le rotor 14 est dans la première position, représentée sur la figure 4, ou encore si, immédiatement après cette mise sous tension, le pôle 113 devient Sud alors que le rotor 14 est dans la deuxième position, représentée sur la figure 5.

Dès que le rotor 14 est ainsi ébranlé, il continue à se déplacer sous l'effet, d'une part, des forces magnétiques mises en jeu et, d'autre part, de sa propre inertie, de façon à ce que chacun des ses pôles Nord se trouve toujours en face d'un pôle Sud, et inversement. Ainsi le champ du stator vu par chacun des pôles du rotor est homopolaire, et, au cours d'une période de 20 ms de la tension V, le rotor tourne ici d'un angle égal au pas polaire de 72°. La vitesse de rotation est donc ici de 10 tours par seconde.

Comme cela a déjà été signalé, si on ne prend aucune précaution particulière lors de la mise en rotation et lors de l'arrêt du moteur 1, son sens de rotation est aléatoire. En effet, lorsqu'il est arrêté, le rotor est soit dans la première position, représentée sur la figure 4, soit dans la deuxième position, représentée sur la figure 5, et le sens dans lequel il part lors de la mise sous tension dépend, d'une part, de la position de repos dans lequel il se trouve et, d'autre part, de l'allule de la tension V au moment de la mise sous tension.

Toutefois, la demanderesse a remarqué que, si l'on prend soin d'ouvrir la connexion reliant l'enroulement 13 à la source 2 de la tension V, à un instant où celle-ci décroit en valeur absolue ou s'annule, la position de repos du rotor 14 après arrêt dépend seulement, d'une part, du sens de rotation qui était celui du rotor 14 avant l'arrêt et, d'autre part, de la pente de la tension V au moment de l'ouverture de la connexion.

Ainsi, et par exemple dans le cas ou les alternances positives de la tension V rendent Nord les pôles 112 et 113, et Sud les pôles 122 et 123, le rotor 14 se trouve dans la première position, représentée sur la figure 4, dans les cas suivants :
- le rotor 14 tournait dans le sens trigonométrique et la pente de la tension V au moment de l'arrêt était positive, ou,
- le rotor 14 tournait dans le sens inverse du sens trigonométrique et la pente de la tension V au moment de l'arrêt était négative.

De même, le rotor 14 se trouve dans la deuxième position, représentée sur la figure 5, dans les cas suivants :
- le rotor 14 tournait dans le sens inverse du sens trigonométrique et la pente de la tension V au moment de l'arrêt était positive, ou,
- le rotor 14 tournait dans le sens trigonométrique et la pente de la tension V au moment de l'arrêt était négative.

De façon similaire, il apparaît que, si l'on prend soin de fermer la connexion reliant l'enroulement 13 à la source 2 de la tension V, à un instant où celle-ci s'annule ou croît en valeur absolue, le sens de rotation du rotor 14 dépend, d'une part, de la position de repos du rotor 14 avant fermeture de la connexion et, d'autre part, du signe de la pente de la tension V au moment de la fermeture de la connexion.

Ainsi, et en conservant toujours les mêmes conventions, le rotor 14 part dans le sens inverse du sens trigonométrique dans les cas suivants :
- le rotor 14 était dans la première position de repos, représentée sur la figure 4, et la pente de la tension V, au moment de la fermeture, est négative, ou,
- le rotor 14 était dans la deuxième position de repos, représentée sur la figure 5, et la pente de la tension V, au moment de la fermeture, est positive.

De même, le rotor 14 part dans le sens trigonométrique dans les cas suivants :
- le rotor 14 était dans la première position de repos, représentée sur la figure 4, et la pente de la tension V, au moment de la fermeture, est positive, ou,
- le rotor 14 était dans la deuxième position de repos, représentée sur la figure 5, et la pente de la tension V, au moment de la fermeture, est négative.

Des considérations précédentes, il découle de manière évidente que si, le moteur 1 étant en rotation, on prend soin d'ouvrir la connexion reliant l'enroulement 13 à la source 2 à un instant où la tension V décroît en valeur absolue ou s'annule, et si on prend soin de mémoriser le signe de la pente à l'instant de l'ouverture, on pourra commander ultérieurement la mise en rotation du moteur 1 dans un sens identique, ou opposé, au choix, à celui avant l'arrêt.

Pour cela, il suffit de commander la fermeture de la connexion reliant l'enroulement 13 à la source 2 à un instant où la tension V s'annule ou croît en valeur absolue, avec une pente de signe respectivement identique, ou opposé, au choix, au signe de la pente qui a été mémorisé. En effet, il est facile de voir que le sens de rotation est conservé si les signes des pentes aux instants d'ouverture et de fermeture sont identiques. Par contre, le sens de rotation change si les signes des pentes aux instants d'ouverture et de fermeture sont opposés.

Ici, c'est le triac 3 qui ouvre et ferme la connexion entre l'enroulement 13 et la source 2, à des instants commandés par le circuit électronique 4 en réponse, d'une part, à la tension alternative V et, d'autre part, aux signaux A, RI et RO. Le circuit électronique 4 est ici agencé pour, en réponse au signal A, cesser d'appliquer tout signal à l'électrode de commande. Le triac 3, amorcé, le restera jusqu'à la fin de l'alternance en cours, et cessera ensuite de conduire. Le circuit électronique 4 détermine le signe de la pente à l'instant d'ouverture et le mémorise.

Le circuit électronique 4 est également agencé, ici pour, en réponse au signal RI, amorcer le triac 3 au prochain instant où la tension V passe par une valeur sensiblement nulle avec une pente de signe identique à celui mémorisé, et pour, en réponse au signal RO, amorcer le triac 3 au prochain instant où la tension V passe par une valeur sensiblement nulle, avec une pente de signe opposé à celui mémorisé.

Ceci est schématisé sur les quatre diagrammes temporels de la figure 6. Sur ces figures, on a représenté en trait pointillé l'allure de la tension V, et en trait plein l'allule de la tension effectivement appliquée à l'enroulement 13. Les deux diagrammes supérieurs correspondent à une mise en rotation dans un sens identique à celui avant arrêt, tandis que les deux diagrammes inférieurs correspondent à une mise en rotation dans un sens opposé à celui avant arrêt. Les impulsions représentent les signaux A, RI et RO.

Naturellement, dans les cas où la durée qui s'écoule entre la consigne d'arrêt et l'arrêt effectif n'est pas critique, le circuit 4 peut, au lieu de commander le triac 3 pour qu'il s'ouvre systématiquement à la fin de l'alternance en cours, le commander pour qu'il s'ouvre systématiquement à la prochaine fin d'alternance positive, qui peut donc être soit celle de l'alternance en cours, soit celle de la suivante. Dans ce cas, il n'est plus nécessaire de déterminer, à chaque ouverture, le signe de la pente pour le mémoriser, puisque celui-ci est systématiquement négatif. Cette procédure est tout à fait équivalente à la précédente. Le circuit 4 peut également commander le triac 3 pour qu'il s'ouvre systématiquement à la prochaine fin d'alternance négative, le signe de la pente à l'ouverture étant alors systématiquement négatif.

Dans l'exemple qui vient d'être décrit, l'ouverture de la connexion d'enroulement a lieu au moment où le courant dans l'enroulement passe par une valeur nulle. Il a déjà ,été noté, d'une part, qu'il en est obligatoirement ainsi lorsque l'on utilise un triac comme interrupteur, et, d'autre part, que, compte tenu de la forte composante résistive de l'enroulement 13, le courant dans l'enroulement et la tension V sont pratiquement en phase, ce qui a pour conséquence le fait que l'instant d'annulation du courant est très proche de l'instant d'annulation de la tension.

Si l'on utilise, au lieu d'un triac, un autre interrupteur, par exemple une paire de transistors, on peut maîtriser l'instant d'ouverture de la connexion, et il suffit alors de commander cette ouverture pour qu'elle se produise pendant tout quart de période de la tension V qui se termine par l'annulation de celle-ci, quart de période pendant lequel la tension V est décroissante en valeur absolue, ou s'annule.

En ce qui concerne l'instant de fermeture, on le maîtrise toujours, que l'on utilise un triac ou une paire de transistors. Il suffit alors que cet instant se produise pendant tout quart de période de la tension V qui commence par l'annulation de celle-ci, quart de période pendant lequel la tension V s'annule ou est croissante en valeur absolue.

Ainsi, il est possible, avec le moteur qui vient d'être décrit, de maîtriser le sens de rotation futur, relativement au sens de rotation passé. Toutefois, pour maîtriser totalement le sens de rotation, il est nécessaire de déterminer au moins une fois, un sens de rotation initial. Ceci peut être fait à la sortie d'usine, et le moteur peut être livré avec l'indication du sens de rotation initial, pour permettre la détermination absolue des sens de rotation futurs, ou avec un dispositif de détermination du sens de rotation.

Toutefois, et afin d'éviter cet inconvénient, l'ensemble qui vient d'être décrit peut être modifié comme cela va maintenant-être décrit en référence à la figure 7.

Sur la figure 7, le triac 3 est relié à l'unique sortie d'un commutateur commandable 5 pourvu de deux entrées. La première entrée est reliée à la source 2, tandis que la deuxième entrée est reliée à une sortie d'un circuit électronique 4', sortie qui délivre une tension continue VC, ici positive et de 220 V. Le circuit électronique 4' remplace le circuit 4 de la figure 1, et il est comme lui pourvu de trois entrées recevant les signaux A, RI et RO, et d'une sortie délivrant le signal C de commande du triac 3. Le circuit électronique 4' est de plus pourvu d'une sortie délivrant un signal de commande CC du commutateur 5.

En fonctionnement normal, le circuit électronique 4' fonctionne comme le circuit électronique 4. Toutefois, il est agencé pour appliquer, avant la première mise en rotation du moteur 1, la tension continue VC, pendant une durée sensiblement égale à 20 ms, à l'enroulement 13.

Ceci a pour effet d'amener nécessairement le rotor 14 dans la première position de repos, représentée sur la figure 4. En effet, si, avant l'application de la tension continue de 220 V, le rotor 14 était dans cette première position de repos, la tension continue de 220 V va rendre Nord le pôle 113 et Sud le pôle 122, ce qui aura pour effet de déplacer le rotor de l'angle α , ici positif, de faible valeur relativement au pas polaire de 72°. Dès cessation de l'application de la tension continue de 220 V, le rotor 14 reprendra sa première position de repos. Si, par contre, le rotor était, avant l'application de la tension continue de 220 V, dans la deuxième position de repos, représentée sur la figure 5, la tension continue de 220 V va rendre Nord le pôle 113 et Sud le pôle 122, ce qui aura pour effet de déplacer le rotor 14 de l'angle β , ici négatif, représentant une partie substantielle du pas polaire de 72°. Dès cessation de l'application de la tension continue de 220 V, le rotor 14 prend alors la première position de repos, représentée sur la figure 4.

Ainsi, l'application de la tension continue permet de prépositionner, à coup sûr, le rotor 14 dans sa première position de repos, représentée sur la figure 4, à partir de laquelle le signe de la pente de la tension V, après fermeture de la connexion entre l'enroulement 13 et la source 2, impose le sens de rotation du rotor 14.

Dans le cas où le moteur 1 est prévu pour fonctionner sous une tension alternative V d'amplitude différente de 220 Veff et de fréquence différente de 50 H_{Z}, il suffit que la tension continue de prépositionnement soit de valeur comparable à la valeur efficace de la tension V, et que sa durée d'application soit comparable à la période de cette tension V. Par comparable, il faut entendre ici du même ordre de grandeur.

Ainsi, pour les applications dans lesquelles est gênante la nécessité de détecter, au moins une fois, le sens de rotation du moteur de la figure 1, le moteur de la figure 7 évite cet inconvénient.

La conception des circuits électroniques 4 et 4' pour réaliser les fonctions qui viennent d'être décrites est évidemment à la portée de l'homme de métier, et ils ne seront donc pas davantage décrits.

Il est à noter que, dans le cas qui vient d'être décrit, la tension continue positive VC prépositionne le rotor 14 dans sa première position, représentée sur la figure 4. Si la tension continue VC est négative, le rotor 14 se trouve alors prépositionné dans sa deuxième position, représentée sur la figure 5.

## Revendications

1. Procédé pour démarrer le rotor (14) à aimant permanent (141) d'un moteur synchrone comprenant ledit rotor et un stator (11-13) à champ homopolaire pourvu d'un enroulement (13) relié à une source (2) de tension alternative (V) par l'intermédiaire d'un interrupteur commandable (3), dans un sens imposé, caractérisé par le fait qu'il comprend l'étape consistant à prépositionner ledit rotor dans une première position de repos en appliquant audit enroulement (13), une tension continue (VC) de valeur comparable à la valeur efficace de ladite tension alternative (V), pendant une durée comparable à la période de ladite tension alternative (V).

2. Procédé selon la revendication 1, dans lequel le sens de démarrage est imposé par le signe de la pente de ladite tension alternative (V) lors d'une fermeture ultérieure dudit interrupteur commandable.

3. Procédé selon l'une quelconque des revendications 1 et 2, mis en oeuvre avant une première mise en rotation dudit rotor (14).

4. Moteur synchrone comprenant un rotor (14) à aimant permanent (141) et un stator (11-13) à champ homopolaire pourvu d'un enroulement (13) relié à une source (2) de tension alternative (V), caractérisé par le fait qu'il est pourvu d'un interrupteur (3) commandable, disposé entre ladite source (2) et ledit enroulement (13), et d'un circuit (4') de commande dudit interrupteur, agencé pour imposer audit rotor un sens de démarrage, et pour appliquer audit enroulement (13), une tension continue (VC) de valeur comparable à la valeur efficace de ladite tension alternative (V), pendant une durée comparable à la période de ladite tension alternative (V) pour prépositionner ledit rotor (14) dans une première position de repos.

5. Moteur selon la revendication 4, dans lequel le circuit (4') de commande est agencé pour imposer audit rotor un sens de démarrage, par le signe de la pente de ladite tension alternative (V) lors d'une fermeture ultérieure dudit interrupteur commandable.

6. Moteur selon l'une quelconque des revendications 4 et 5, dans lequel le circuit (4') de commande est agencé pour appliquer ladite tension continue (VC) audit enroulement avant une première mise en rotation dudit rotor (14).
